(19) Europäisches Patentamt

European Patent Office

Office européen des brevets

(11) **EP 3 888 879 A1**

(12) **EUROPEAN PATENT APPLICATION**

(43) Date of publication:
**06.10.2021 Bulletin 2021/40**

(21) Application number: **20382264.8**

(22) Date of filing: **02.04.2020**

(51) Int Cl.:
**B29C 48/05** (2019.01)  **B29C 48/255** (2019.01)
**B29C 48/285** (2019.01)  **B29C 48/30** (2019.01)
**B29C 64/118** (2017.01)  **B29C 64/209** (2017.01)
**B33Y 10/00** (2015.01)  **B33Y 30/00** (2015.01)
**B33Y 40/00** (2020.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Universitat de Girona
17004 Girona (ES)**

(72) Inventors:
• ADUMITROAIE, Adi
17004 Girona (ES)
• BLANCO VILLAVERDE, Norbert
17004 Girona (ES)
• COSTA BALANZAT, Josep
17004 Girona (ES)

(74) Representative: **Ponti & Partners, S.L.P
C. de Consell de Cent 322
08007 Barcelona (ES)**

(54) **AN EXTRUSION HEAD AND A METHOD FOR CONTINUOUS FUSED FILAMENT FABRICATION**

(57)   The present invention relates to an extrusion head (1) for continuous fused filament fabrication, comprising a shape-morphing channel (8) with an inlet (7) with a rectangular cross-section, an outlet (6) with a non-rectangular cross-section, and a plurality of different consecutive transition inner cross-sections configured and arranged to progressively force a continuous filament or tape (2), while passing therethrough, to gradually change its cross-section from a rectangular cross-section to a non-rectangular cross-section.

The present invention also relates to a method for continuous fused filament fabrication adapted to use the extrusion head of the invention.

Figure 1

EP 3 888 879 A1

## Description

FIELD OF THE INVENTION

The present invention relates, in a first aspect, to an extrusion head for continuous fused filament fabrication, which is configured and arranged to be fed with a filament having a rectangular cross-section, such as tapes or strips, and optimally and gradually transform the same while flowing within the extrusion head, to finally provide the same with a non-rectangular cross-section for its deposition on a growing work.

In a second aspect, the present invention relates to a method for continuous fused filament fabrication adapted to use the extrusion head of the first aspect of the invention.

The invention is preferably applied to the technology field of continuous fibre reinforced thermoplastic polymer additive manufacturing (AM, also referred to as 3D printing). The AM method addressed here falls under the process category of material extrusion AM (according to classification in ISO/ASTM 52900:2015 "Standard Terminology for Additive Manufacturing - General Principles - Terminology"), namely Fused Filament Fabrication (FFF).

BACKGROUND OF THE INVENTION

Extrusion heads configured for extruding a continuous filament into a desired cross-section are known in the art.

Some of those already known extrusion heads, such as that disclosed by EP3219474B1, extrude a filament with the same cross-section shape as that of the filament entering an inner channel of the extrusion head, such as a rectangular cross-section.

Others, such as those disclosed by EP3004435B1, comprise a reshaping "nozzlet" in charge of carrying out the reshaping of the continuous filament to provide a desired shape, especially flattening, by means of an ironing lip or tip of the "nozzlet" that includes a shape for forming top or side surfaces of bonded ranks, in particular a curved lip or chamfer, a straight lip or chamfer, or a square or rectangle reshaping surface.

There are also known in the art extrusion heads such as that disclosed by US20190240970A1, which discloses an extrusion head having a rectangular inner channel for extruding a ribbon filament into a circular cross-section filament. The inner channel can be tapered but has only rectangular cross-sections there along, being an end extrusion tip having a circular cross-section the responsible for providing the extruded filament with a circular cross-section. Generally, the filament is a neat polymer filament, although for some embodiments it can include non-continuous carbon or glass fibres. The method and extrusion head disclosed by US20190240970A1 are not technically applicable to continuous fibre reinforcement extrusion, which requires constant cross-section area of the reshaping channel. Squeezing the material based on the effect of increasing the speed of the outlet material, compared to the speed of the inlet material, is not possible for continuous fibre reinforcements.

Extrusion heads for continuous fused filament fabrication which comprise the features of the preamble of claim 1, i.e. which comprises a reshaping inner channel configured for reshaping a continuous filament flowing therethrough, in a melted form, from an inlet to an outlet of the reshaping inner channel of the extrusion head, to change the cross-section of the continuous filament from a rectangular-cross-section to a non-rectangular cross-section are also known in the art, for example in EP3147107A1.

Specifically, EP3147107A1 discloses an extrusion head which comprises a tapered cylindrical inner channel which, when heated, fuses and redistributes fibre-free surface portions of a filament so that a final circular cross-section for the filament is provided. The need of a filament having those fibre-free surface portions, particularly of a feedstock composite laminated strip, makes the extrusion head unsuitable for operating with already commercially available feedstock tapes having reinforcement fibres embedded therein uniformly distributed, without having those free-fibre surface portions. A complex in-house process comprising lamination-slitting-coating operations/machines is needed to manufacture the feedstock composite laminated strip required by the method and extrusion head disclosed in EP3147107A1.

It is, therefore, necessary to provide an alternative to the state of the art which covers the gaps found therein, by providing an extrusion head which lacks of the above mentioned drawbacks associated to the extrusion heads known in the art, specifically as regards its configuration for providing an optimized reshaping of the filament and its suitability to work with rectangular cross-section filaments reinforced with fibres uniformly distributed therein.

SUMMARY OF THE INVENTION

To that end, the present invention relates, in a first aspect, to an extrusion head for continuous fused filament fabrication, comprising a reshaping inner channel configured for reshaping a continuous filament flowing therethrough, in a melted form, from an inlet to an outlet of the reshaping inner channel of the extrusion head, to change the cross-section of the continuous filament from a rectangular-cross-section to a non-rectangular cross-section.

In contrast to the extrusion heads of the state of the art, in the one of the first aspect of the present invention, in a characterizing manner, the above mentioned inlet of the reshaping inner channel of the extrusion head has a rectangular cross-section, its outlet has a non-rectangular cross-section, and its reshaping inner channel is a shape-morphing channel with a plurality of different consecutive transition inner cross-sections configured and arranged to progressively force the continuous filament, while passing therethrough, to gradually change its cross-section from said rectangular cross-section to said non-rectangular cross-section.

Preferably, the shape-morphing channel is configured and arranged for reshaping a continuous fibre reinforced filament constituted by a pre-impregnated (prepreg) continuous fibre reinforced thermoplastic or thermoplastic/thermoset tape or strip or ribbon, which comprises at least one reinforcing continuous fibre (generally unidirectionally (UD) oriented) pre-impregnated within a thermoplastic or thermoplastic/thermoset polymer matrix, wherein said melted form refers to the melting of said thermoplastic or thermoplastic/thermoset polymer matrix (i.e., the fibres are not melted), and wherein the cross-sectional area of the shape-morphing channel is kept constant for each of said inlet, outlet and different consecutive transition inner cross-sections.

However, alternatively or complementarily, the shape-morphing channel is configured and arranged for reshaping a thermoplastic/thermoset tape or strip reinforced with non-continuous fibres.

The present invention constitutes a working solution for using commercially available high-quality prepreg tapes, which is really needed in the art in order to substitute those solutions based on circular cross-section filaments as feedstock material. During the fibre composites 3D printing process based on those circular cross-section filaments as feedstock material, the thermal heat transferred from heating source to the filament deeply relies on the resin matrix which has a low heat conductivity coefficient. Therefore, the situation is that the filament outer surface reaches above degradation temperature, while the core area is still below melting temperature, especially for high printing speed and large diameter filaments. This issue is even more problematic for the case of high performance engineering thermoplastic polymers, which feature even lower thermal conductivity, as matrix for the 3D printed composites. The solution proposed by the present invention which is based on tape feedstock material addresses this issue by increasing the contact area between the heater and the input feedstock material, and improving thus the heat transfer.

The reinforcing fibre(s) can be of any kind among the available high stiffness and strength engineering fibre types (e.g., glass, carbon, basalt, ceramic, metallic, aramid, etc.). Hybrid reinforcements based on combining different fibre types can also be used with the present invention.

The thermoplastic/thermoset polymer matrix is formed by at least a thermoplastic material which can be of any kind among the available families of general purpose (e.g., PVC, PS, ABS, PP, PCL, PLA, etc.), engineering (e.g., PC, ABS, PVD, PBT, PET, PA, etc.) or high performance (e.g., PPSU, PSU, PPS, LCP, PI, PAI, PEI, PEAK, PEEK, PEKK, etc.) thermoplastic polymer grades. Matrix formulations including various nano/micro size fillers of any shape/aspect ratio (e.g., fibres, pellets, particles) and material (e.g., polymer, metal, ceramic, glass, graphite, silica, diamond, etc.) can also be used with the present invention. Thermoplastic/thermoset polymer blends can also be considered as matrix for the feedstock prepreg tape; in which case the operating temperature transferred to the shape-morphing channel has to be above the glass transition temperature (Tg) of the thermoset phase of the matrix polymer blend.

For a preferred embodiment, the above mentioned non-rectangular cross-section is a circular cross-section, and the plurality of different consecutive transition inner cross-sections includes oval cross-sections.

For an alternative embodiment, the above mentioned non-rectangular cross-section is an elliptical cross-section.

For a first implementation of that preferred embodiment, the shape-morphing channel runs along a coordinate x, from $x=0$ at the inlet to $x=L$ at the outlet, where L corresponds to the length of the shape-morphing channel, and wherein a generic inner cross-section at said coordinate x along the shape-morphing channel has a geometry between rectangle and circle, made of two parallel first segments of length $W_x$, two parallel second segments of length $T_x$, and four connecting segments of radii $R_x$ connecting the first segments with the second segments, wherein:

- the length $W_x$ of each first segment gradually decreases over the length L of the shape-morphing channel from an initial length $W_0$ at $x=0$ till vanishing at $x=L$ so that $W_L=0$;
- the length $T_x$ of each second segment gradually decreases over the length L of the shape-morphing channel from an initial length $To$ at $x=0$ till vanishing at $x=L$ so that $T_L=0$; and
- the radius $R_x$ of each connecting segment gradually increases over the length L of the shape-morphing channel from an initial radius $R_0 = 0$ at $x=0$, at which the first segments are directly connected to the second segments by their ends, to $R_L= D_L/2$ at $x=L$, where $D_L$ corresponds to the diameter of the circular outlet cross-section.

According to a variant of that first implementation, the gradual decrease over the length L of the length $W_x$ of each first segment is linear, while the gradual decrease over the length L of the length $T_x$ of each second segment is non-linear.

For an alternative variant of that implementation, the gradual decrease over the length L of the length $W_x$ of each first segment is non-linear, while the gradual decrease over the length L of the length $T_x$ of each second segment is linear.

According to a second implementation of the above described preferred embodiment, the shape-morphing channel runs along a coordinate x, from x=0 at the inlet to x=L at the outlet, where L corresponds to the length of the shape-morphing channel, and wherein a generic inner cross-section at said coordinate x along the shape-morphing channel has a geometry between rectangle and circle, made of two opposed first segments of length or span $W_x$ and radii $R_x$, and two parallel second segments of length $T_x$ connecting the two opposed first segments, wherein:

- for x=0 each first segment is a straight segment with length $W_x$, while for x≠0 each first segment is a circular arch segment with an arch span $W_x$, wherein $W_x$ gradually decreases over the length L of the shape-morphing channel from an initial length $W_0$ at x=0 to $W_L=D_L$ at x=L, where $D_L$ corresponds to the diameter of the circular outlet cross-section;
- the length $T_x$ of each second segment gradually decreases over the length L of the shape-morphing channel from an initial length $To$ at x=0 till vanishing at x=L so that $T_L=0$; and
- the radius $R_x$ of each first segment gradually decreases over the length L of the shape-morphing channel from an initial radius Ro= $\infty$ at x=0, to $R_L= D_L/2$ at x=L.

According to a variant of that second implementation, the gradual decreases over the length $L$ of $W_x$ and $T_x$ are linear, while the gradual decrease over the length of radius $R_x$ of each first segment is non-linear.

For an embodiment of the extrusion head of the first aspect of the present invention, the geometries and arrangement of each of the consecutive transition inner cross-sections of the shape-morphing channel are selected based on rheological criteria regarding the flow of the continuous filament through the shape-morphing channel.

The extrusion head of the first aspect of the present invention also comprises, for an embodiment, heating means for transferring heat during a determined time to the interior of the shape-morphing channel for heating the continuous filament flowing there through, and wherein the length L of the shape-morphing channel and the determined time and the temperature of the transferred heat are mutually dependent.

In the present document, all of the above mentioned cross-sections (inlet, outlet, consecutive transition, or generic cross-sections) of the shape-morphing channel of the extrusion head of the present invention refer to cross-sections running through planes which are orthogonal to the length of the shape-morphing channel.

In a second aspect, the present invention also relates to a method for continuous fused filament fabrication, wherein the method comprises using the extrusion head of the first aspect of the invention, by means of the following steps:

- transferring heat to the interior of the shape-morphing channel of the extrusion head with a temperature above the melting temperature of a continuous filament, and while that heat is transferred sequentially performing the following steps;
- feeding the continuous filament, which initially has a rectangular cross-section, into the shape-morphing channel by introducing the continuous filament through the inlet thereof, so that the continuous filament flows in a melted form through the shape-morphing channel and is reshaped thereby; and
- depositing on a growing work the continuous filament coming out of the shape-morphing channel, through its outlet, with a non-rectangular cross-section.

For an embodiment of the method of the second aspect of the present invention, the rectangular cross-section of the continuous filament fed into the shape-morphing channel has a short side length of $T_0-t_T$ and a long side length of $W_0-t_W$, where $T_0$ and $W_0$ are respectively the short and the long side lengths of the rectangular cross-section of the shape-morphing channel, and $t_T$ and $t_W$ are tolerances selected to allow for passing the continuous filament through the shape-morphing channel without encountering high frictional forces.

In a further aspect, the present invention relates to a method for designing and building the extrusion head of the first aspect of the present invention, for any of its embodiments, comprising the steps of determining the dimensions, geometry and arrangement of the shape-morphing channel, including all the cross-sections thereof, and the building of the extrusion head with a shape-morphing channel having the determined dimensions, geometry and arrangement.

For an embodiment of the method for designing and building the extrusion head, the method comprises determining the geometries and arrangement of each of the consecutive transition inner cross-sections of the shape-morphing channel based on rheological criteria regarding the flow of the continuous filament through the shape-morphing channel, while for another embodiment (alternative or complementary) the method comprises determining the length L of the shape-morphing channel based on the determined time and the temperature of heat to be transferred to the interior of the shape-morphing channel for heating the continuous filament flowing there through.

By means of the present invention, for all its aspects, the following main advantages are achieved.

A first main advantage is that the present invention allows for the use of the feedstock prepreg tapes which are readily available on the market, being produced in high quality and well controlled industrial processes, and in a variety of polymer/fibre combinations. The prepreg tapes are currently produced (and aerospace certified) as feedstock (input) materials for another composite manufacturing technology, the so called AFP ("Automated Fibre Placement").

A second main advantage is that, by using the readily available prepreg tapes dedicated to the aerospace industry, the problem of high performance thermoplastic polymers (e.g., PEEK, PEKK, PEI, etc.) as matrix for the 3D printed composite is actually tackled and dealt with, under the proposed invention. Other relevant players on the market are currently stuck with lower performance polymers, exactly because of the impregnation difficulties encountered in order to manufacture their own pre-impregnated filaments based on high-performance thermoplastic polymers.

In this way, by using the market available high-quality prepreg tapes as feedstock (input) for the present invention, multiple advantages are achieved:

- an open-source composite 3D printing technology with respect to the feedstock material to be used by the composite 3D printer user (all the other players on the market "lock" the printer user to their own materials).
- aerospace certified high quality of the feedstock material, which directly translates into the quality of the output 3D printed filaments (there are severe issues with the quality of the in-house locked materials offered by the other players, since they are actually not material developers).
- a wide range of polymer/fibre combination for the feedstock materials, including high-performance thermoplastic polymers (the other players on the market offer very limited material sets).
- the perspective of ever new material sets (polymer/fibres) to be included in the future, as triggered by the developments of new polymer and/or fibre formulations, and interests of the AFP manufacturing technology.

BRIEF DESCRIPTION OF THE FIGURES

In the following some preferred embodiments of the invention will be described with reference to the enclosed figures. They are provided only for illustration purposes without however limiting the scope of the invention.

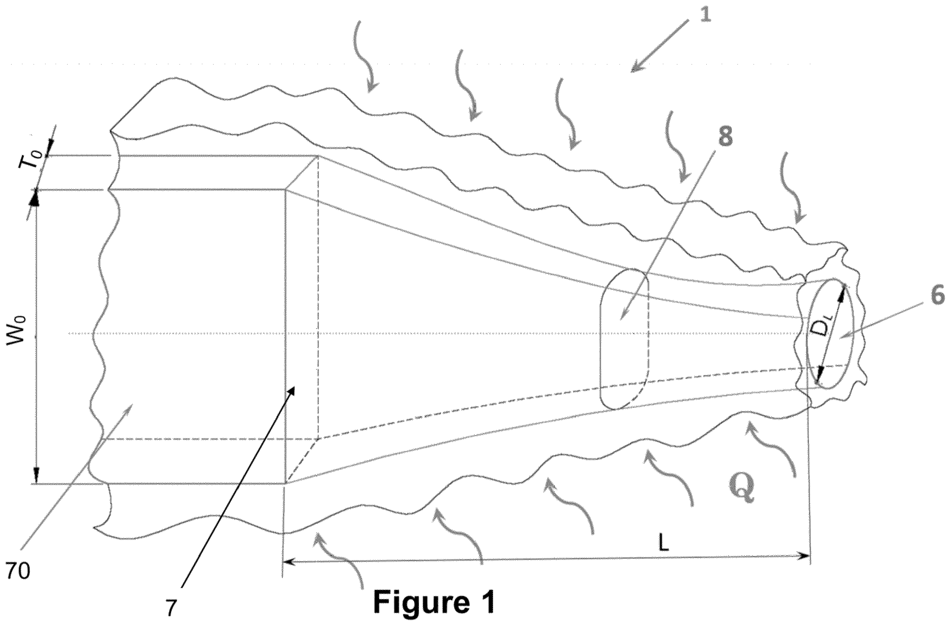

Figure 1 schematically shows the extrusion head of the first aspect of the present invention, while being submitted to heat transferred form a heat source Q. The shape-morphing channel has a length L, its inlet is in fluid communication with a uniform cross-section channel having the same cross-section as that inlet, and is depicted within only part of the body of the extrusion head, particularly of the walls of that body defining the channel. Note that Figure 1 is drawn according to technical drawing convention to express the idea that the boundary/border of the body goes beyond the wavy line. The external shape of the extrusion head body in Figure 1 is not the concern of the present invention.

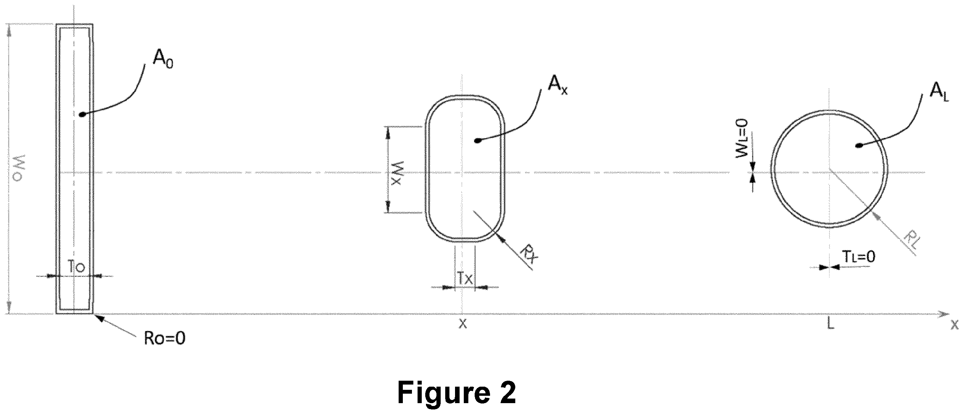

Figure 2 shows different cross-sections of the shape-morphing channel of the extrusion head of the first aspect of the present invention, for an embodiment, particularly its inlet cross-section (left view), an intermediate transition cross-section (centre view), and its outlet cross-section (right view).

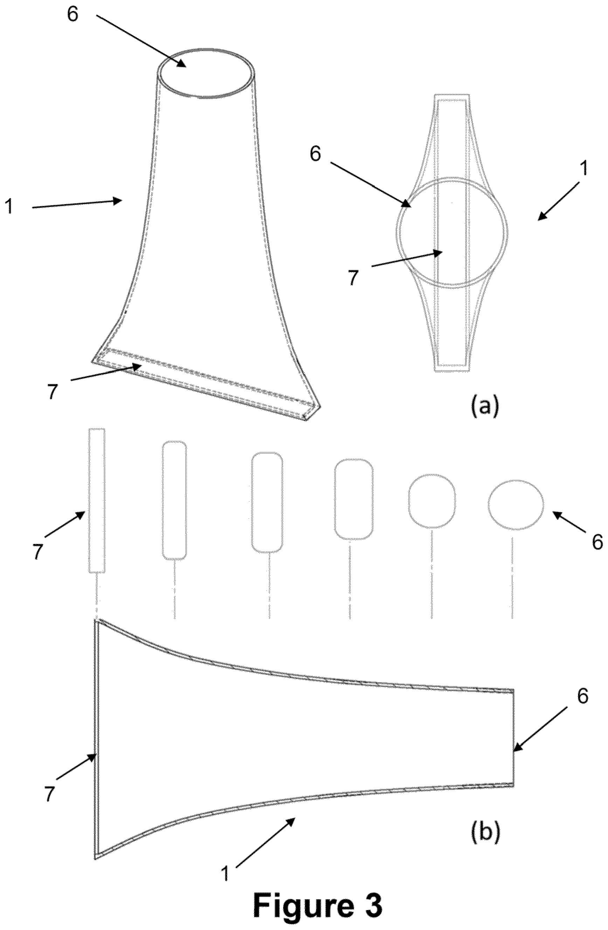

Figure 3 shows different views of the extrusion head of the first aspect of the invention for an implementation of the embodiment of Figure 2. (a) perspective (left view) and top plan view (right view), where the boundaries of the shape-morphing channels have been depicted with dashed lines; (b) elevational view of a cross-section taken through a plane that runs along the length of the channel (bottom view) and inlet, outlet and several intermediate transition cross-sections (top view) of the shape-morphing channel.

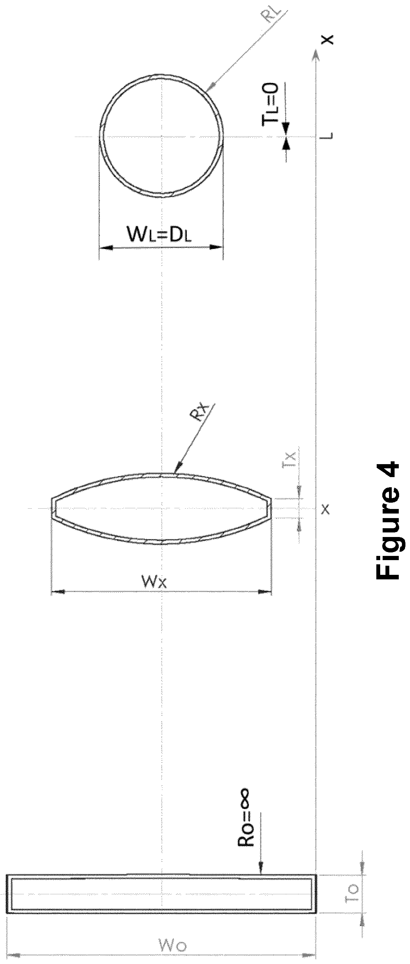

Figure 4 also shows different cross-sections of the shape-morphing channel of the extrusion head of the first aspect of the present invention, particularly its inlet cross-section (left view), an intermediate transition cross-section (centre view), and its outlet cross-section (right view), but for another embodiment different to that of Figure 2.

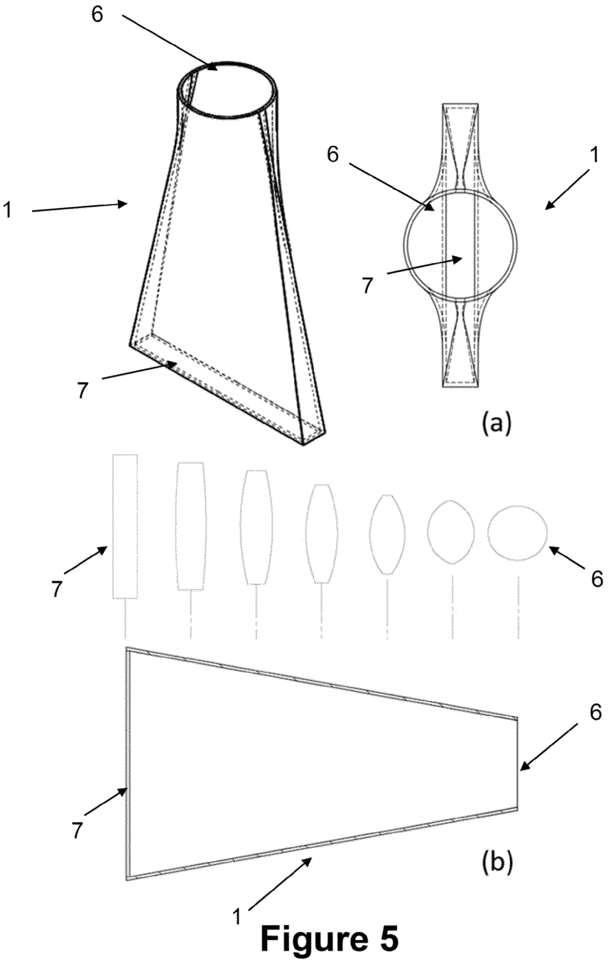

Figure 5 also shows different views of the extrusion head of the first aspect of the invention for an implementation of the embodiment of Figure 4. (a) perspective (left view) and top plan view (right view), where the boundaries of the shape-morphing channels have been depicted with dashed lines; (b) elevational view of a cross-section taken through a plane that runs along the length of the channel (bottom view) and inlet, outlet and several intermediate transition cross-sections (top view) of the shape-morphing channel.

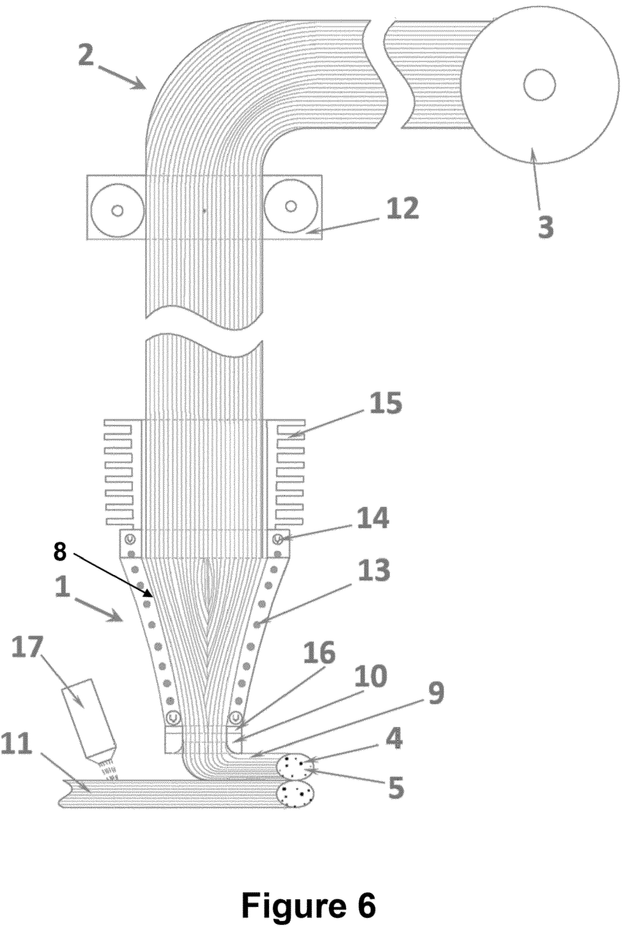

Figure 6 schematically shows, in use, a system comprising the extrusion head of the first aspect of the present invention, for an embodiment.

DESCRIPTION OF THE PREFERRED EMBODIMENTS

The extrusion head 1 for continuous fused filament fabrication of the first aspect of the present invention, together with different cross-sections of its shape-morphing channel 8 are shown in the appended figures, for different embodiments.

For all the illustrated embodiments, the extrusion head 1 comprises a shape-morphing channel 8 configured for reshaping a continuous filament 2 flowing therethrough, in a melted form, from an inlet 7 having a rectangular cross-section to an outlet 6 which has a circular cross-section, through a plurality of different consecutive transition inner cross-sections of the shape-morphing channel 8, which are configured and arranged to progressively force the continuous filament 2, while passing therethrough, to gradually change its cross-section from its rectangular cross-section to a circular cross-section, in the form of a filament 9 (as shown in Figure 6) to be depositing on a growing work.

As shown in Figure 6, preferably, in the extrusion head 1 of the first aspect of the shape-morphing channel 8 is configured and arranged for reshaping a continuous fibre UD reinforced filament 2 constituted by a pre-impregnated continuous fibre reinforced thermoplastic or thermoplastic/thermoset tape or strip 2, which comprises several reinforcing continuous fibres 4 pre-impregnated within a thermoplastic or thermoplastic/thermoset polymer matrix 5, wherein the above mentioned melted form refers to the melting of the thermoplastic or thermoplastic/thermoset polymer matrix 5 (i.e., the fibres are not melted), and wherein the cross-sectional area of the shape-morphing channel 8 is kept constant for each of the inlet 7, outlet 6 and different consecutive transition inner cross-sections.

The short side length $T_0$-$t_T$ and long side length $W_0$-$t_W$ of the continuous filament 2, generally a feedstock prepreg tape, are to be selected according to the outlet diameter $D_L$ (see Figure 1) of the extrusion head 1. The inlet 7 of the shape-morphing channel 8 of the extrusion head 1 has the same rectangular shape as the cross-section of the feedstock tape 2. The dimensions of the inlet 7 are $To$ and $W_0$, where $t_T$ and $t_W$ are small tolerances selected to allow for passing the continuous filament 2 through the shape-morphing channel 8 without encountering high frictional forces.

The reinforcing fibres 4 continuity impose that the fibre/matrix composite blend has to flow at a constant speed throughout the extrusion head 1, which in turn imposes that the inlet 7 cross-sectional area is equal to the outlet 6 cross-sectional area. This condition provides the relationship between parameters $To$, $W_0$ and the outlet 6 diameter $D_L$:

$$D_L = 2\sqrt{\frac{((T_0 - t_T) + t_T)((W_0 - t_W) + t_W)}{\pi}} \qquad [1]$$

Another geometry design parameter of the extruder head 1 is the length L of the shape-morphing channel 8, shown in Figure 1 (note that length L only corresponds to the length of the shape-morphing channel 8, without including the length of the uniform cross-section channel 70 nor of any further channel); which can be selected according to the heat exposure time (heat quantity) needed to melt the thermoplastic matrix inside of the shape-morphing channel 8. Thus, there is a total of five geometry design parameters for shape-morphing channel 8 of the extrusion head 1 (also known as liquefier): $T_0$, $W_0$, $t_T$, $t_W$, $L$.

As stated above, the cross-sectional area A of the shape-morphing channel 8 is kept constant for each of the inlet 7, outlet 6 and different consecutive transition inner cross-sections, i.e.:

$$A = (T_0)(W_0) \qquad [2]$$

In this way, the input feedstock tape 2 of rectangular cross-section is forced to change cross-sectional shape while passing through the shape-morphing channel 8, being morphed into a circular filament 9 at its outlet 6. The circular filament 9 is then deposited according to the FFF process control, as shown in Figure 6.

Different solutions can be adopted for the design of the shape-morphing channel 8. Two of them are shown in the Figures, particularly an implementation of a first design solution in Figures 2 and 3, and an implementation of a second design solution in Figures 4 and 5. These design solutions will be explained below, but must be interpreted as nonlimiting the scope of the invention, as many alternative design solutions can be envisaged for the same purpose which are also embraced by the scope of the present invention.

*First design solution:*

For this first design solution (called in a previous section as first implementation of a preferred embodiment), the shape-morphing channel 8 runs along a coordinate x, from $x=0$ at the inlet 7 to $x=L$ at the outlet 6, where L corresponds to the length of the shape-morphing channel 8, and wherein, as shown in Figure 2, a generic inner cross-section at said coordinate x along the shape-morphing channel 8 has a geometry between rectangle and circle, made of two parallel first segments of length $W_x$, two parallel second segments of length $T_x$, and four connecting segments of radii $R_x$ connecting the first segments with the second segments, wherein:

- the length $W_x$ of each first segment gradually decreases over the length L of the shape-morphing channel 8 from an initial length $W_0$ at $x=0$ till vanishing at $x=L$ so that $W_L=0$;
- the length $T_x$ of each second segment gradually decreases over the length L of the shape-morphing channel 8 from an initial length $To$ at $x=0$ till vanishing at $x=L$ so that $T_L=0$;
- the radius $R_x$ of each connecting segment gradually increases over the length L of the shape-morphing channel 8

from an initial radius $R_0$ = 0 at x=0, at which the first segments are directly connected to the second segments by their ends, to $R_L$= $D_L/2$ at x=L, where $D_L$ corresponds to the diameter of the circular outlet 6 cross-section (as indicated in Figure 1); and

- as stated above with reference to equation [2], the cross-sectional area A is kept constant over the entire distance L of the shape-morphing channel 8, so that in Figure 2: $A_0 = A_x = A_L$.

According to an implementation of the first design solution, the gradual decrease over the length L of the length $W_x$ of each first segment is linear, while the gradual decrease over the length L of the length $T_x$ of each second segment is non-linear.

For that implementation:

$$W_x = W_0 \left(1 - \frac{x}{L}\right) \qquad [3.1]$$

$$R_x = \frac{x}{L} \sqrt{\frac{T_0 W_0}{\pi}} \qquad [3.2]$$

$$T_x = \frac{T_0 W_0 - 2W_x R_x - \pi R_x^2}{W_x + 2R_x} \qquad [3.3]$$

For an alternative implementation of the first design solution, the gradual decrease over the length L of the length $W_x$ of each first segment is non-linear, while said gradual decrease over the length L of the length $T_x$ of each second segment is linear.

For that alternative implementation:

$$T_x = T_0 \left(1 - \frac{x}{L}\right) \qquad [4.1]$$

$$R_x = \frac{x}{L} \sqrt{\frac{T_0 W_0}{\pi}} \qquad [4.2]$$

$$W_x = \frac{T_0 W_0 - 2T_x R_x - \pi R_x^2}{T_x + 2R_x} \qquad [4.3]$$

Figure 3 shows the extrusion head 1 of the first aspect of the present invention with a shape-morphing channel 8 with its different cross-sections designed according to the above equations [4.1]-[4.3], i.e. according to the above described the alternative implementation of the first design solution.

*Second design solution:*

For this second design solution (called in a previous section as second implementation of a preferred embodiment), the shape-morphing channel 8 runs along a coordinate x, from x=0 at the inlet 7 to x=L at the outlet 6, where L corresponds to the length of the shape-morphing channel 8, and wherein, as shown in Figure 4, a generic inner cross-section at said coordinate x along the shape-morphing channel 8 has a geometry between rectangle and circle, made of two opposed first segments of length or span $W_x$ and radii $R_x$, and two parallel second segments of length $T_x$ connecting the two opposed first segments, wherein:

- for x=0 each first segment is a straight segment with length $W_x$, while for x≠0 each first segment is a circular arch segment with an arch span $W_x$, wherein $W_x$ gradually decreases over the length L of the shape-morphing channel 8 from an initial length $W_0$ at x=0 to $W_L$=$D_L$ at x=L, where $D_L$ corresponds to the diameter of the circular outlet 6 cross-section (as indicated in Figure 1);
- the length $T_x$ of each second segment gradually decreases over the length L of the shape-morphing channel 8 from an initial length To at x=0 till vanishing at x=L so that $T_L=0$;
- the radius $R_x$ of each first segment gradually decreases over the length L of the shape-morphing channel 8 from an initial radius $R_0 = \infty$ at x=0, to $R_L = D_L/2$ at x=L; and
- as stated above with reference to equation [2], the cross-sectional area A is kept constant over the entire distance L of the shape-morphing channel 8.

According to an implementation of the second design solution, the gradual decreases over the length *L* of $W_x$ and $T_x$ are linear, while the gradual decrease over the length of radius $R_x$ of each first segment is non-linear.

For that implementation:

$$W_x = \frac{D_L - W_0}{L} x + W_0 \qquad\qquad [5.1]$$

$$T_x = -\frac{T_0}{L} x + T_0 \qquad\qquad [5.2]$$

$$g_x - \sin(g_x)\cos(g_x) - 2\frac{T_0 W_0 - T_x W_x}{W_x{}^2}\sin^2(g_x) = 0 \qquad\qquad [5.3]$$

$$R_x = \frac{W_x}{2\sin g_x} \qquad\qquad [5.4]$$

Figure 5 shows the extrusion head 1 of the first aspect of the present invention with a shape-morphing channel 8 with its different cross-sections designed according to the above equations [5.1-5.4], i.e. according to the above described implementation of the second design solution.

The choice between the design solutions presented before (or any other design solution, derived in a similar manner, that satisfies the shape morphing and the constant area design requirements) can be made according to the flow (rheology) behavior of the melt composite material system and/or according to the available capabilities of precise manufacturing for the extrusion head 1. Moreover, similar design solutions can be derived in a similar manner for morphing from rectangular cross-section input tape to elliptical cross-section output filament, if desired. It is considered that the cross-section output filament is the optimal one, offering the maximum flexibility for 3D printing.

Possible outlet extrusion diameters $D_L$, calculated according to equation [1] based on the currently available ATL/AFP thermoplastic prepreg tape materials, are provided in the Table below, where "thickness" corresponds to the short side length $T_0$-$t_T$ of the tape 2 while "width" corresponds to the long side length $W_0$-$t_W$ of the tape 2:

| thickness [mm] | width [in, mm] | | | |
|---|---|---|---|---|
| | 1/8 | 1/4 | 3/8 | 1/2 |
| | 3.175 | 6.350 | 9.525 | 12.700 |
| 0.130 | 0.725 | 1.025 | 1.256 | 1.450 |
| 0.150 | 0.779 | 1.101 | 1.349 | 1.557 |
| 0.180 | 0.853 | 1.206 | 1.477 | 1.706 |
| 0.300 | 1.101 | 1.557 | 1.907 | 2.203 |
| 0.600 | 1.557 | 2.203 | 2.698 | 3.115 |
| 0.900 | 1.907 | 2.698 | 3.304 | 3.815 |
| 1.200 | 2.203 | 3.115 | 3.815 | 4.405 |
| 1.500 | 2.462 | 3.482 | 4.265 | 4.925 |
| 1.800 | 2.698 | 3.815 | 4.672 | 5.395 |
| 2.100 | 2.914 | 4.121 | 5.047 | 5.827 |
| 2.400 | 3.115 | 4.405 | 5.395 | 6.230 |
| 2.700 | 3.304 | 4.672 | 5.722 | 6.608 |
| 3.000 | 3.482 | 4.925 | 6.032 | 6.965 |

To be noted that the same outlet 6 diameter $D_L$ can correspond to one single input tape 2 (for example, 6.350 mm in Table above) or to two stacked tapes 2 of the same type (thickness) but of half width (for example, 3.175 mm in Table above). Thus, multiple stacked input tapes (2) can be used, if needed. This can be useful for the following example cases:

- the fibre/matrix composition of single prepreg tape 2 provides little stiffness to one single wide tape 2, which makes it more difficult to pass through the liquefier 1;
- different material systems (i.e., type of reinforcing fibres 4 and/or type of polymer matrix 5) are used for different tapes of the input stack, in order to obtain a hybrid 3D printed material filament 9 at the extruder outlet 6;
- the outlet 6 extrusion diameter is wanted at a value above the one possible by a single input tape 2, etc.

Current industrial thermoplastic prepreg tapes have a thickness between 0.13-0.18 mm, corresponding to the first three entries of the Table. The following thickness entries in the Table correspond to inputs of multiple stacked tapes of individual thickness 0.150 mm. When input of multiple stacked tapes is wanted, then preliminary lamination (e.g., hot press conditions) of the individual tapes before entering the liquefier 1 can be considered as well, in order to avoid entrapping air between the individual stacked tapes.

In the case that the outlet 6 extrusion diameter is wanted at a value in between the one listed in Table, then the input tape 2 has to be slit at the corresponding $W_0$-$t_W$ value which will provide the needed $D_L$ value according to equation [1].

Figure 6 schematically shows, in use, a system comprising the extrusion head 1 of the first aspect of the present invention, for an embodiment.

The thermoplastic tape 2 illustrate therein is pre-manufactured in a processing step dedicated to the 3D printing feedstock material manufacturing, before 3D printing. The feedstock material 2 can be the same as the classical UD prepreg thermoplastic tapes currently used in the Automatic Tape Layup (ATL) / Automatic Fibre Placement (AFT) composite manufacturing classical methods, i.e. prepreg tapes (single tape or stacked tapes) of standard short side length of $T_0$-$t_T$ = 0.1- 0.5 mm and standard long side lengths of $W_0$-$t_W$ = of 3.175, 6.35, *12.7 mm (1/8, 1/4, 1/2 in)*, or any of the above discussed table. For the embodiment illustrated in Figure 6, the feedstock prepreg tapes 2 are stored on and fed to the composite extrusion head 1 from regular plastic spools 3, similar to the regular FFF 3D printing systems.

In Figure 6, the extrusion head 1 includes the shape-morphing channel 8 and also includes or is integrated into a system for FF which includes at least the following further elements:

10: extrusion nozzle at the outlet 6 of shape-morphing channel 8 of the extrusion head 1.
12: feedstock tape feeding mechanism of the extrusion head 1.
13: heat source for heating the extrusion head 1 above the melting temperature (Tm) of the thermoplastic matrix, in order to melt the thermoplastic phase of the matrix/fibres blend of tape 2 passing through the shape-morphing channel 8.

14: temperature sensor (thermocouple) for controlling the heat source 13 and the temperature applied to extrusion head 1.

15: heat dissipation element and cooler (heat sink).

16: fibre cut mechanism.

The tape feeding mechanism 12 can be implemented by means of hardware units separate from the extrusion head 1. Elements 10, 13, 14, 15 and 16 are hardware elements to be integrated into the system comprising the extrusion head 1.

The extruded filament 9 circular cross-section shape at the liquefier/extruder outlet 6 can be altered (according to the desired 3D printed part design) to an elliptical one through setting (into the 3D printer setup and control system (not sown)) the 3D printing layer thickness less than the diameter $D_L$. In this way, a compaction pressure will be applied by the end-nozzle 10 on the extruded filament 9, resulting in compressing the melt-state filament 9 and changing its cross-sectional shape from circular to elliptical. The extruded filament compaction process can also be beneficial for increasing the bond strength to the previously deposited filament 11.

If necessary, according to the 3D printer system design, an additional separate heat source 17 can be integrated into the 3D printer system, and controlled in a synchronized manner with the extrusion head 1. The role of the auxiliary heat source 17 would be to re-heat previously deposited filaments 11, such that a good inter-filament adhesion bond strength can be achieved between the currently deposited filament 9 and previously neighbouring deposited filaments 11. The selection of the auxiliary heat source 17 type (hot air, laser or ion radiation, etc.) is to be decided according to the 3D printer system design. The auxiliary heat source 17 might be especially useful for the case of printing high-performance polymer matrix composites, or for the case of large dimensions parts (when the previously deposited filament is already cooled by the time the printer head 1 returns to the same point to deposit the next filament).

A person skilled in the art could introduce changes and modifications in the embodiments described without departing from the scope of the invention as it is defined in the attached claims. Specifically, as stated above, alternative design solutions for the shape-morphing channel can be envisaged to gradually change the cross-section of the filament/tape flowing therethrough.

**Claims**

1. An extrusion head (1) for continuous fused filament fabrication, comprising a reshaping inner channel (8) configured for reshaping a continuous filament (2) flowing therethrough, in a melted form, from an inlet (7) to an outlet (6) of the reshaping inner channel (8) of the extrusion head, to change the cross-section of the continuous filament (2) from a rectangular-cross-section to a non-rectangular cross-section, **characterized in that** said inlet (7) has a rectangular cross-section, said outlet (6) has a non-rectangular cross-section, and **in that** said reshaping inner channel (8) is a shape-morphing channel (8) with a plurality of different consecutive transition inner cross-sections configured and arranged to progressively force the continuous filament (2), while passing therethrough, to gradually change its cross-section from said rectangular cross-section to said non-rectangular cross-section.

2. The extrusion head (1) according to claim 1, wherein said shape-morphing channel (8) is configured and arranged for reshaping a continuous fibre reinforced filament (2) constituted by a pre-impregnated continuous fibre reinforced thermoplastic or thermoplastic/thermoset tape or strip (2), which comprises at least one reinforcing continuous fibre (4) pre-impregnated within a thermoplastic or thermoplastic/thermoset polymer matrix (5), wherein said melted form refers to the melting of said thermoplastic or thermoplastic/thermoset polymer matrix (5), and wherein the cross-sectional area of the shape-morphing channel (8) is kept constant for each of said inlet (7), outlet (6) and different consecutive transition inner cross-sections.

3. The extrusion head (1) according to any of the previous claims, wherein said non-rectangular cross-section is a circular cross-section, said plurality of different consecutive transition inner cross-sections including oval cross-sections.

4. The extrusion head (1) according to claim 3 when depending on claim 2, wherein the shape-morphing channel (8) runs along a coordinate x, from $x=0$ at the inlet (7) to $x=L$ at the outlet (6), where L corresponds to the length of the shape-morphing channel (8), and wherein a generic inner cross-section at said coordinate x along the shape-morphing channel (8) has a geometry between rectangle and circle, made of two parallel first segments of length $W_x$, two parallel second segments of length $T_x$, and four connecting segments of radii $R_x$ connecting the first segments with the second segments, wherein:

- the length $W_x$ of each first segment gradually decreases over the length L of the shape-morphing channel (8) from an initial length $W_0$ at x=0 till vanishing at x=L so that $W_L$=0;
- the length $T_x$ of each second segment gradually decreases over the length L of the shape-morphing channel (8) from an initial length $T_0$ at x=0 till vanishing at x=L so that $T_L$=0; and
- the radius $R_x$ of each connecting segment gradually increases over the length L of the shape-morphing channel (8) from an initial radius $R_0$ = 0 at x=0, at which the first segments are directly connected to the second segments by their ends, to $R_L$= $D_L$/2 at x=L, where $D_L$ corresponds to the diameter of the circular outlet (6) cross-section.

5. The extrusion head (1) according to claim 4, wherein said gradual decrease over the length L of the length $W_x$ of each first segment is linear, while said gradual decrease over the length L of the length $T_x$ of each second segment is non-linear.

6. The extrusion head (1) according to claim 5, wherein:

$$W_x = W_0 \left(1 - \frac{x}{L}\right)$$

$$R_x = \frac{x}{L} \sqrt{\frac{T_0 W_0}{\pi}}$$

$$T_x = \frac{T_0 W_0 - 2W_x R_x - \pi R_x^2}{W_x + 2R_x}$$

7. The extrusion head (1) according to claim 4, wherein said gradual decrease over the length L of the length $W_x$ of each first segment is non-linear, while said gradual decrease over the length L of the length $T_x$ of each second segment is linear.

8. The extrusion head (1) according to claim 7, wherein:

$$T_x = T_0 \left(1 - \frac{x}{L}\right)$$

$$R_x = \frac{x}{L} \sqrt{\frac{T_0 W_0}{\pi}}$$

$$W_x = \frac{T_0 W_0 - 2T_x R_x - \pi R_x^2}{T_x + 2R_x}$$

9. The extrusion head (1) according to claim 3 when depending on claim 2, wherein the shape-morphing channel (8) runs along a coordinate x, from x=0 at the inlet (7) to x=L at the outlet (6), where L corresponds to the length of the shape-morphing channel (8), and wherein a generic inner cross-section at said coordinate x along the shape-morphing channel (8) has a geometry between rectangle and circle, made of two opposed first segments of length or span $W_x$ and radii $R_x$, and two parallel second segments of length $T_x$ connecting the two opposed first segments, wherein:

- for x=0 each first segment is a straight segment with length $W_x$, while for x≠0 each first segment is a circular arch segment with an arch span $W_x$, wherein $W_x$ gradually decreases over the length L of the shape-morphing channel (8) from an initial length $W_0$ at x=0 to $W_L$=$D_L$ at x=L, where $D_L$ corresponds to the diameter of the circular outlet (6) cross-section;
- the length $T_x$ of each second segment gradually decreases over the length L of the shape-morphing channel (8) from an initial length $T_0$ at $x=0$ till vanishing at $x=L$ so *that $T_L=0$; and*
- the radius $R_x$ of each first segment gradually decreases over the length L of the shape-morphing channel (8) from an initial radius $R_0 = \infty$ at $x=0$, to $R_L = D_L/2$ at $x=L$.

10. The extrusion head (1) according to claim 9, wherein said gradual decreases over the length $L$ of $W_x$ and $T_x$ are linear, while said gradual decrease over the length of radius $R_x$ of each first segment is non-linear.

11. The extrusion head (1) according to claim 10, wherein:

$$W_x = \frac{D_L - W_0}{L}x + W_0$$

$$T_x = -\frac{T_0}{L}x + T_0$$

$$g_x - \sin(g_x)\cos(g_x) - 2\frac{T_0 W_0 - T_x W_x}{W_x^2}\sin^2(g_x) = 0$$

$$R_x = \frac{W_x}{2\sin(g_x)}$$

12. The extrusion head (1) according to any of the previous claims, wherein the geometries and arrangement of each of said consecutive transition inner cross-sections of the shape-morphing channel (8) are selected based on rheological criteria regarding the flow of the continuous filament (2) through the shape-morphing channel (8).

13. The extrusion head (1) according to any of the previous claims, further comprising heating means for transferring heat during a determined time to the interior of the shape-morphing channel (8) for heating the continuous filament (2) flowing there through, and wherein the length L of the shape-morphing channel (8) and said determined time and the temperature of the transferred heat are mutually dependent.

14. A method for continuous fused filament fabrication, **characterized in that** the method comprises using the extrusion head (1) according to any of the previous claims, by means of the following steps:

    - transferring heat to the interior of the shape-morphing channel (8) of the extrusion head (1) with a temperature above the melting temperature of a continuous filament (2), and while said heat is transferred sequentially performing the following steps;
    - feeding said continuous filament (2), which initially has a rectangular cross-section, into the shape-morphing channel (8) by introducing the continuous filament (2) through the inlet (7) thereof, so that the continuous filament (2) flows in a melted form through the shape-morphing channel (8) and is reshaped thereby; and
    - depositing on a growing work the continuous filament (9) coming out of the shape-morphing channel (8), through its outlet (6), with a non-rectangular cross-section.

15. The method according to claim 14, wherein the rectangular cross-section of the continuous filament (2) fed into the shape-morphing channel has a short side length of $T_0$-$t_T$ and a long side length of $W_0$-$t_W$, where $T_0$ and $W_0$ are respectively the short and the long side lengths of the rectangular cross-section of the shape-morphing channel (8), and $t_T$ and $t_W$ are tolerances selected to allow for passing the continuous filament (2) through the shape-morphing channel (8) without encountering high frictional forces.

Figure 1

**Figure 2**

(a)

(b)

**Figure 3**

**Figure 4**

(a)

(b)

**Figure 5**

**Figure 6**

Europäisches
Patentamt

European
Patent Office

Office européen
des brevets

# EUROPEAN SEARCH REPORT

Application Number

EP 20 38 2264

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 3 147 107 A1 (BOEING CO [US]) 29 March 2017 (2017-03-29) * abstract * * paragraphs [0052], [0056] - [0059] * * figures 5A-5C * ----- | 1,2, 12-15 | INV. B29C48/05 B29C48/255 B29C48/285 B29C48/30 B29C64/118 |
| X | US 2016/122541 A1 (JAKER VITTORIO L [US] ET AL) 5 May 2016 (2016-05-05) | 1,2, 12-15 | B29C64/209 B33Y10/00 |
| A | * abstract * * paragraphs [0090], [0095] * * claim 14 * * figures 3,4B * ----- | 3-11 | B33Y30/00 B33Y40/00 |
| X | US 2015/096717 A1 (BATCHELDER J SAMUEL [US] ET AL) 9 April 2015 (2015-04-09) | 1,3, 12-15 | |
| A | * abstract * * paragraphs [0048], [0067] - [0070] * * claim 15 * * figures 4,5 * ----- | 2,4-11 | |
| X | EP 2 905 118 A1 (BOEING CO [US]) 12 August 2015 (2015-08-12) | 1,12-15 | TECHNICAL FIELDS SEARCHED (IPC) |
| A | * abstract * * paragraphs [0014], [0017] * * claims 12,13 * * figures 4,6,8A * ----- | 2-11 | B29C B33Y |

The present search report has been drawn up for all claims

| Place of search | Date of completion of the search | Examiner |
|---|---|---|
| Munich | 23 September 2020 | Koning, Erik |

**ANNEX TO THE EUROPEAN SEARCH REPORT
ON EUROPEAN PATENT APPLICATION NO.**

EP 20 38 2264

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2020

| Patent document cited in search report | | | Publication date | Patent family member(s) | | | Publication date |
|---|---|---|---|---|---|---|---|
| EP 3147107 | A1 | | 29-03-2017 | BR | 102016016984 | A2 | 25-07-2017 |
| | | | | CA | 2932827 | A1 | 25-02-2017 |
| | | | | CN | 106479186 | A | 08-03-2017 |
| | | | | EP | 3147107 | A1 | 29-03-2017 |
| | | | | JP | 2017094710 | A | 01-06-2017 |
| | | | | KR | 20170024525 | A | 07-03-2017 |
| | | | | RU | 2016122491 | A | 12-12-2017 |
| | | | | US | 2017057181 | A1 | 02-03-2017 |
| | | | | US | 2020016845 | A1 | 16-01-2020 |
| US 2016122541 | A1 | | 05-05-2016 | EP | 3215569 | A1 | 13-09-2017 |
| | | | | US | 2016122541 | A1 | 05-05-2016 |
| | | | | US | 2018361674 | A1 | 20-12-2018 |
| | | | | WO | 2016073409 | A1 | 12-05-2016 |
| US 2015096717 | A1 | | 09-04-2015 | US | 2015096717 | A1 | 09-04-2015 |
| | | | | US | 2016263830 | A1 | 15-09-2016 |
| EP 2905118 | A1 | | 12-08-2015 | BR | 102015000314 | A2 | 26-07-2016 |
| | | | | CA | 2869641 | A1 | 07-08-2015 |
| | | | | CN | 104827639 | A | 12-08-2015 |
| | | | | EP | 2905118 | A1 | 12-08-2015 |
| | | | | JP | 2015147414 | A | 20-08-2015 |
| | | | | JP | 2018167585 | A | 01-11-2018 |
| | | | | JP | 2020128091 | A | 27-08-2020 |
| | | | | RU | 2014144125 | A | 27-05-2016 |
| | | | | US | 2015224699 | A1 | 13-08-2015 |
| | | | | US | 2017120516 | A1 | 04-05-2017 |

EPO FORM P0459

For more details about this annex : see Official Journal of the European Patent Office, No. 12/82

**EP 3 888 879 A1**

**Patent documents cited in the description**

- EP 3219474 B1
- EP 3004435 B1
- US 20190240970 A1
- EP 3147107 A1